# EUROPÄISCHE PATENTSCHRIFT

(11) **EP 1 414 886 B1**
(45) Veröffentlichungstag und Bekanntmachung des Hinweises auf die Patenterteilung: **27.04.2005**
(21) Anmeldenummer: 02767222.9
(22) Anmeldetag: 17.07.2002
(51) Int. Cl.: C08G 63/82, C08G 63/78

(54) **VERFAHREN ZUR HERSTELLUNG VON THERMOPLASTISCHEN POLY(3-HYDROXYALKANOATEN)**
METHOD FOR THE PRODUCTION OF THERMOPLASTIC POLY(3-HYDROXYALKANOATES)
PROCEDE POUR PRODUIRE DES POLY(3-HYDROXYALCANOATES) THERMOPLASTIQUES

(30) Priorität: 31.07.2001 DE 10137046
(43) Veröffentlichungstag der Anmeldung: 06.05.2004
(73) Patentinhaber: BASF AKTIENGESELLSCHAFT, 67056 Ludwigshafen (DE)
(72) Erfinder: SLANY, Michael, 67281 Kirchheim (DE); LUINSTRA, Gerrit, 68161 Mannheim (DE); SAVA, Xavier, 68161 Mannheim (DE)
(86) Internationale Anmeldenummer: PCT/EP2002/007936
(87) Internationale Veröffentlichungsnummer: WO 2003/011941

(56) Entgegenhaltungen:
- EP-A- 0 577 206
- DE-A- 19 508 627
- GB-A- 1 020 575
- US-A- 5 281 691
- PATENT ABSTRACTS OF JAPAN vol. 1997, no. 10, 31. Oktober 1997 (1997-10-31) & JP 09 169753 A (TOKUYAMA CORP), 30. Juni 1997 (1997-06-30)

## Beschreibung

Die vorliegende Erfindung betrifft ein Verfahren zur Herstellung von thermoplastischen Poly(3-hydroxyalkanoaten).

Poly-β-hydroxyfettsäuren bzw. Poly(3-hydroxyalkanoate)sind als biologisch vollständig abbaubare Polymere in ökologischer wie auch wirtschaftlicher Hinsicht von großem Interesse. Dieses trifft insbesondere auch auf Polyhydroxybutyrolacton zu, das unter bestimmten Vorgaben über ein thermoplastisches Eigenschaftsprofil verfügt.

Kommerziell sind Polyhydroxybutyrolactone bislang fermentativ hergestellt worden (s.a. Y. Doi, Microbial Polyester, VCH Weinheim 1980, u.a. Seiten 1 bis 14; und Produktbroschüre Biopol® der Firma Zeneca Ltd., 1993). Allerdings lässt sich das so erhaltene Polymerprodukt nur aufwendig aus dem Fermentationsgemisch in reiner Form gewinnen (Y. Doi, ibid., Seiten 21 ff). Beispielsweise sind zunächst die Zellen aufzubrechen, bevor das Polymerrohprodukt extrahiert werden kann. Die resultierenden Herstellkosten können daher gegenwärtig mit denen für herkömmliche Thermoplaste nicht konkurrieren. Von Nachteil ist außerdem, dass das mittels Mikroorganismen hergestellte Polymer ausschließlich in hochisotaktischer Form anfällt, womit es über einen hohen Schmelzpunkt von etwa 180°C verfügt und für gängige Kunststoffverarbeitungstechniken wie Extrusion oder Spritzguss aufgrund von Zersetzungsreaktionen nicht in Frage kommt. Zudem sind solche Materialien ohnehin relativ steif und brüchig. Das Handelsprodukt Biopol® der Firma Zeneca Ltd. enthielt demgemäß neben Hydroxybutyrateinheiten als Hauptbestandteil stets auch zumindest geringe Anteile an statistisch verteilten Hydroxyvalerateinheiten. Nur auf diese Weise konnte ein ausreichend flexibles und zähes Material erhalten werden (s.a. Y. Doi, ibid., Seiten 107 bis 133).

Gemäß der WO 94/00506 und WO 95/20616 gelangt man ebenfalls ausgehend von β-Butyrolacton über die ringöffnende Polymerisation zu Poly-β-hydroxybutyrolacton. Diese Reaktionen verlaufen jedoch nicht stereospezifisch und führen zu ataktischen Polymeren, die bei Raumtemperatur zähfließend sind und ebenfalls für gängige Werkstoffanwendungen von Polymeren nicht in Frage kommen. Akzeptable Ausbeuten und Molekulargewichte werden nach der WO 94/00506 ohnehin nur dann erhalten, wenn unter absolut wasserfreien bzw. nahezu wasserfreien Bedingungen polymerisiert wird, was aufwendige Trocknungsmaßnahmen für die verwendeten Reagenzien und Gerätschaften erforderlich macht. Gleiches trifft zu auf das in der WO 95/20616 beschriebene Verfahren, bei dem anstelle von gemäß WO 94/00506 zu verwendenden Carboxylatanionen als Initiatoren Alkylzinkalkoxide eingesetzt werden. Um kunststofftechnisch verwertbares isotaktisches Poly-β-butyrolacton zu erhalten, ist in beiden vorgenannten Fällen von enantiomeremreinen β-Butyrolacton als Monomerverbindung auszugehen. Der synthetische Zugang zu diesen Verbindungen ist jedoch, insbesondere für großtechnische Anwendungen, sehr komplex und kostenintensiv und auch die Aufreinigung ist mit hohem Aufwand verbunden (s.a. Seebach et al., Helv. Chim. Acta 1994, 77, Seiten 1099 bis 1123 und von Lengweiler, Helv. Chim. Acta 1996, 79, Seiten 670 bis 701, sowie Breitschuh et al., Chimia 1990 (44), S. 216 bis 218. und Ohta et al., J.Chem.Soc., Chem. Commun. 1992, S. 1725 bis 1726).

(Teil)syndiotaktisches oder (teil)isotaktisches Poly-β-hydroxybutyrolacton ist des weiteren über eine stereospezifische Polymerisation von R/S-β-Butyrolacton zugänglich (s.a. Gross et al., Macromolecules 1988 (21), S. 2657 bis 2668; Kricheldorf et al., Macromolecules 1994 (27), S. 3139 bis 3146). Allerdings lassen sich auch mit diesen Verfahren Produktverunreinigungen durch Anteile von ataktischem Poly-β-hydroxybutyrolacton, die nur sehr aufwendig aus dem Polymerisationsgemisch wieder zu entfernen sind, nie vollständig vermeiden. Für Werkstoffanwendungen kommen daher solche Materialien nicht in Frage. Nachteilig an den beschriebenen stereospezifischen Polymerisationen ist weiterhin deren lange Reaktionszeit.

Die stereospezifische Polymerisation von Butyrolacton kann darüber hinaus sowohl unter Retention, Inversion oder Teilinversion verlaufen (Hori et al., Macromolecules 1993 (26) S. 5533 bis 5534; Zhang et al., Polymer Preparation, 1989 (30) S. 400 bis 401; Jedlinski et al., Macromolecules 1998 (31) S. 6718 bis 6720; und Zhang et al. Macromolecules 1990 (23) S. 3206 bis 3212).

In der EP-A 0 577 206 wird die Carbonylierung von Ethylenoxid mit Hilfe eines Katalysatorssystems enthaltend Co₂(CO)₈ und eine Hydroxypyridinverbindung beschrieben. Es wurde beobachtet, dass das gewünschte Zielprodukt β-Propiolacton sich insbesondere in Gegenwart eines Promotors nach längerer Zeit in Teilen zu Poly-3-hydroxypropionat umsetzt. Weitere Untersuchungen bzw. Überlegungen zu dieser Nebenreaktion wurden nicht angestellt, Angaben zum Molekulargewicht fehlen gänzlich.

Gemäß US 3,590,075 lassen sich aus Oxiran/Kohlenmonoxidgemischen in Gegenwart von Metallsalzen der Gruppe VIII B des Periodensystems der Elemente sowie Aminen bzw. Alkanolaminen polymere Verbindungen erhalten. Hierbei handelt es sich jedoch nicht um Polyester, sondern um Polyetherester, in der Regel mit einem hohen Etheranteil, die zudem nur in Molekulargewichten im Bereich von 300 g/mol erhalten werden können.

Um zu (teil)syndiotaktischem oder (teil)isotaktischem Poly-β-hydroxybutyrolacton mit hohen Molekulargewichten zu gelangen, also zu einem Material, das ein für technische Anwendungen brauchbares Eigenschaftsprofil aufweist, wurde von von Lengweiler et al., ibid., ein aufwendiges mehrstufiges Verfahren entwickelt, das jedoch für kommerzielle Anwendungen ungeeignet ist, da es sich präparativ aufwendiger Schutzgruppenchemie bedient, um zu wohldefinierten Polymeren mit einheitlichem Molekulargewicht zu gelangen.

Der vorliegenden Erfindung lag daher die Aufgabe zugrunde, ein Verfahren zur Herstellung von Poly(3-hydroxyalkanoaten) mit thermoplastischem Eigenschaftsprofil zur Verfügung zu stellen, das sich insbesondere auch großtechnisch einfach und kostengünstig durchführen lässt und bei dem keine aufwendigen Reinigungs- oder Auftrennschritte für Edukte und/oder Produkte anfallen und bei dem auch enantiomerenreine Edukte unproblematisch bereitgestellt werden können.

Demgemäß wurde ein Verfahren zur Herstellung von thermoplastischen Poly(3-hydroxyalkanoaten) mit einem Molekulargewicht größer 6.000 g/mol, vorzugsweise größer 8.000 g/mol und insbesondere größer 10.000 g/mol und einem Schmelzpunkt im Bereich von 70 bis 170, vorzugsweise von 80 bis 160°C gefunden, bei dem man eine Oxiranverbindung mit Kohlenmonoxid in Gegenwart eines mit neutralen Lewis-Basen chelatisierten Übergangsmetallkatalysators mit Rhodium(0), Nickel(0), Eisen(0), Cobalt(0) oder Palladium(0) als Zentralmetall sowie in Gegenwart von Orthoestern, Acetalen, Anhydriden, P₂O₅, MgO, MgCl₂, MgSO₄, Zeolithen oder deren Mischungen bei einem Druck im Bereich von 1 bis 250, vorzugsweise von 5 bis 100 bar und einer Temperatur im Bereich von Raumtemperatur, d.h. etwa 25°C, bis 150, vorzugsweise von 60 bis 120°C umsetzt.

Besonders geeignet sind Cobalt(0)verbindungen wie Dicobaltoctacarbonyl.

Die Katalysatorverbindung liegt üblicherweise in Mengen von 0,001 bis 20, bevorzugt von 0,05 bis 10 und besonders bevorzugt von 0,1 bis 1 Mol-%, bezogen auf die Oxiranverbindung, im Polymerisationsgemisch vor.

Es kann auch metallisches Cobalt in sehr feinteiliger oder Staubform eingesetzt werden.

Ohne an diese Interpretation gebunden zu sein, wird vermutet, dass als katalytisch aktive Spezies unter den Reaktionsbedingungen eine so genannte 16-Elektronen Cobaltverbindung, z.B. HCo(CO)₃, wirksam ist (s.a. S.G. Davies, Organotransition Metal Chemistry, Pergamon Press, Oxford, 1982, S. 366 bis 378).

Als Oxiranverbindungen sind Ethylenoxid sowie in 1-Position substituierte Epoxide geeignet. Hierbei handelt es sich üblicherweise um solche Verbindungen, die unter die folgende allgemeine Formel (I) fallen: 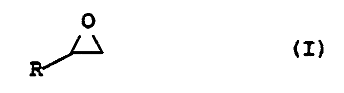 worin der Rest R Wasserstoff, C₁- bis C₁₀-Alkyl, C₆- bis C₁₄-Aryl oder Alkylaryl mit 1 bis 10 C-Atomen im Alkylteil und 6 bis 14 C-Atomen im Arylteil bedeutet.

C₁- bis C₁₀-Alkyl umfasst lineare wie auch verzweigte Alkylreste, also z.B. Methyl, Propyl, n-Propyl, i-Propyl, n-Butyl, s-Butyl, t-Butyl sowie n-Pentyl oder n-Hexyl und deren verzweigtkettige Varianten. Bevorzugt als Alkylrest sind Methyl und Ethyl, insbesondere Methyl.

Geeignete Arylreste stellen die Phenyl-, Naphtyl- oder Anthracenylgruppe dar, wobei Phenyl bevorzugt ist. Als Alkylarylrest kommt insbesondere die Benzylgruppe in Betracht.

Die beschriebenen Reste können darüber hinaus ein- oder mehrfach mit Halogenatomen oder inerten funktionellen Gruppen substituiert sein. Eine funktionelle Gruppe im Sinne der vorliegenden Erfindung ist dann inert, wenn sie unter den gewählten Reaktionsbedingungen keine Reaktion eingeht oder keine Nebenreaktion initiiert. Als funktionelle Gruppen kommen z.B. die Ester-, Ether-, Trifluormethyl-, Nitro- oder Dimethylaminofunktionalität in Frage.

Bevorzugt wird auf Oxiranverbindungen der allgemeinen Formel (I) zurückgegriffen, in denen R Wasserstoff, Methyl, Ethyl, n-Propyl, n- oder i-Butyl, insbesondere Methyl bedeutet.

Für thermoplastische Werkstoffanwendungen von Bedeutung ist, wenn Ethylenoxid als Oxiranverbindung eingesetzt wird u.a., dass man einen Polyester mit einer ausreichend hohen Molekulargewicht oberhalb von 6.000 g/mol, insbesondere oberhalb von 8.000 g/mol erhält. Bei Verwendung von in 1-Position substituierten Oxiran-Verbindungen ist es in diesem Zusammenhang von Vorteil, wenn diese nicht in Form des Racemats eingesetzt werden, sondern entweder enantiomerenrein oder, in Bezug auf das Stereozentrum in 1-Position, in optisch angereicherter Form vorliegen, d.h., das R-1/S-1-Verhältnis bzw. S-1/R-1-Verhältnis ist ungleich 1. Bevorzugt kommen R-1/S-1-Verhältnisse oder S-1/R-1-Verhältnis im Bereich von 1:4 bis 1:200, besonders bevorzugt im Bereich von 1:8 bis 1:70 zum Einsatz.

Bevorzugt werden Oxirane mit einer Enantiomerenreinheit im Bereich von 60 bis 99, besonders bevorzugt von 65 bis 99 und insbesondere von 70 bis 95 %-ee eingesetzt.

Besonders bevorzugt ist aus optisch angereichertem Propenoxid erhaltenes teilisotaktisches Polyhydroxybutyrolacton.

Die für das erfinclungsgemäße Verfahren zu verwendenden Oxiranverbindungen können z.B. über dem Fachmann bekannte Epoxidierungen von endständigen Olefinen gewonnen werden. Verläuft die Epoxidierung stereounspezifisch, ist eine Racematspaltung vorzunehmen. Methoden zur Racematspaltung, z.B. mittels HPLC-Chromatographie mit chiralem Säulenmaterial, sind dem Fachmann bekannt. Vorteilhafterweise stellt man die Oxiranverbindung ausgehend von einem endständigen Olefin über etablierte stereoselektive Verfahren unmittelbar in enantiomerenreiner oder in optisch angereicherter Form dar. Ein geeignetes Verfahren ist z.B. die so genannte Sharpless-Epoxidierung (s.a. J.Am.Chem.Soc. 1987 (109), S. 5765 ff. und 8120 ff.; sowie "Asymmetrie Synthesis", Hrsg. J.D. Morrison, Academic Press, New York, 1985, Band 5, Kapitel 7 und 8).

Des weiteren gelangt man über bei Jacobsen et al. (Tetrahedron Lett. 1997, 38, Seiten 773 bis 776; und J. Org. Chem. 1998, 63, Seiten 6776 bis 6777) beschriebene Verfahren ausgehend von endständigen Olefinen bzw. racemischen terminalen Epoxiden zu optisch angereicherten Oxiranverbindungen, die auch großtechnisch einfach durchzuführen sind (s.a. Acc. Chem. Res. 2000, 33, Seiten 421 bis 431).

Selbstverständlich ist es auch möglich, optisch angereicherte Oxiranverbindungen dadurch herzustellen, dass man zur enantiomerenreinen Oxiranverbindung das Racemat in entsprechender Menge beimengt.

Als Verbindungen mit endständiger Doppelbindung kommen grundsätzlich alle Olefine dieser verbindungsklasse in Betracht, also z.B. Propen, 1-Buten, 1-Penten, 1-Hexen, 1-Hepten oder 1-Octen.

Geeignete Orthoester sind Verbindungen des Typs R²-C(OR³)₃. R² und R³ können dieselbe Bedeutung wie R¹ annehmen, also beispielsweise Akyl, Aryl oder Cycloalkyl darstellen. Geeignet sind insbesondere Orthoester, in denen R² Wasserstoff, Methyl, Ethyl, n- oder i-Propyl, n-, i- oder t-Butyl, oder Phenyl bedeutet. Als Reste R³ kommen z.B. Methyl, Ethyl, n- oder i-Propyl, n-, i- oder t-Butyl, Cyclohexyl oder, Phenyl oder Benzyl in Betracht. Unter bevorzugte Orthoester fallen demgemäß Trimethoxymethan, Triethoxymethan, Tripropoxymethan, Triisopropoxymethan, 1,1,1-Trimethoxyethan, 1,1,1-Triethoxyethan, 1,1,1-Trimethoxypropan, 1,1,1-Triethoxypropan, 1,1,1-Trimethoxybutan, 1,1,1-Trimethoxypentan, (Trimethoxymethyl)-benzol, (Triethoxymethyl)-benzol.

Unter Anhydride im Sinne der Erfindung sollen vorliegend Carbonsäureanhydride verstanden werden. Hierbei handelt es sich um Kupplungsprodukte zweier Carbonsäuren der allgemeinen Formel R⁴C(O)-O-C(O)R⁵. Die Reste R⁴ und R⁵ können die für R¹ beschriebene Bedeutung annehmen. Bevorzugt wird unter den Anhydriden auf Essig-, Trifluoressig-, Propion-, Glutar-, Malein-, und Bernsteinsäureanhydrid zurückgegriffen.

Unter Acetale fallen vorliegend Verbindungen der allgemeinen Formel (R⁶)(R⁷)C(OR⁸)(OR⁹), in denen R⁶ bis R⁹ die vorgehend für R¹ genannte Bedeutung annehmen können, wobei R⁶ oder R⁷ auch einen Wasserstoffrest darstellen können. Bevorzugt bedeuten R⁶ und R⁷ Wasserstoff, Methyl, Ethyl, n-Propyl, i-Propyl, n-Butyl, sec-Butyl, t-Butyl, wobei R⁶ und R⁷ nicht gleichzeitig einen Wasserstoffrest darstellen. Unter den Acetalen ist 2,2'-Dimethoxypropan besonders bevorzugt.

Bei Zeolithen handelt es sich um Alkali- und Erdalkali-Alumosilicate. Diese Verbindungsklasse ist, ebenso wie die vorgenannten Diisocyanate, Acetale, Orhtoester und Anhydride, dem Fachmann hinlänglich bekannt und im Handel erhältlich.

In einer bevorzugten Ausführungsform enthält das Polymerisationsgemisch zusätzlich hydroxysubstituierte N-Aromaten. Als solche N-Aromaten kommen ein oder mehrfach mit Hydroxygruppen substituierte aromatische Stickstoff-Heterocyclen in Frage. Die N-Aromaten verfügen über ein, zwei oder drei Stickstoffatome im bevorzugt 5- oder 6-gliedrigen aromatischen Ringsystem. Der Stickstoffheterocyclus kann auch Bestandteil eines annellierten aromatischen Ringsystems sein. Unter geeignete N-Aromaten fallen danach z.B. Pyrrol, Pyridin, Chinolin, Isochinolin, Pyrimidin, Pyrazin oder Benzopyrazin, sofern diese Verbindungen im Molekül mindestens eine freie Hydroxygruppe enthalten. Weiterhin kommen solche N-Aromaten in Betracht, die nicht mit aromatischen, sondern mit aliphatischen 5-, 6- oder 7-gliedrigen Ringsystemen annelliert sind. Die Hydroxygruppe kann sich sowohl am aromatischen Heterocyclus als auch am annellierten aliphatischen oder aromatischen Ringsystem befinden. Neben der Hydroxygruppe kann der N-Aromat auch über weitere aliphatische, aromatische oder Halogensubstituenten verfügen.

Besonders bevorzugt wird unter den hydroxysubstituierten N-Aromaten auf 2-Hydroxy-, 3-Hydroxy,- 4-Hydroxy-, 3,4-Dihydroxypyridin sowie auf 3-Hydroxychinolin, 4-Hydroxy-2-Methylpyridin und 3-Hydroxy-4-methylpyridin zurückgegriffen. Besonders bevorzugt ist 3-Hydroxypyridin.

Die einzusetzende Menge an hydroxysubstituiertem N-Aromaten liegt im allgemeinen im Bereich von 0,1 bis 10 bevorzugt im Bereich von 0,5 bis 4 Äquivalenten, bezogen auf die Menge an eingesetzter Cobaltverbindung.

In einer weiteren bevorzugten Ausführungsform enthält das Polymerisationsgemisch neben oder anstelle von hydroxysubstituierten N-Aromaten hydroxyaromatische Verbindungen. Geeignete hydroxyaromatische Verbindungen basieren auf C₆- bis C₁₄-Aromaten wie Phenyl, Naphthyl oder Anthracenyl, insbesondere Phenyl, mit einer oder mehreren Hydroxygruppen als Substituenten. Besonders geeignet ist Phenol. Die hydroxyaromatischen Verbindungen werden im allgemeinen in Mengen im Bereich von 0,1 bis 10 , bevorzugt im Bereich von 0,5 bis 4 molare Äquivalenten bezogen auf die Menge an Cobaltverbindung eingesetzt.

Die Poly(3-hydroxyalkanoate) werden gemäß dem erfindungsgemäßen Verfahren durch Umsetzung von Oxiranverbindungen und Kohlenmonoxid in Gegenwart der beschriebenen Katalysatorverbindungen, insbesondere Cobalt oder Cobaltverbindungen, und Diisocyanaten, Orthoestern, Acetalen, Anhydriden, P₂O₅, MgO, MgCl₂, MgSO₄ oder Zeolithen oder deren Mischungen hergestellt.

In der Regel ist auch ein Lösungsmittel, zumeist in geringen Mengen, zuzugegen, das in der Hauptsache den Zweck hat, Cobalt bzw. Cobaltverbindung und hydroxysubstituierten und N-Aromaten in das Polymerisationsgefäß einzuführen.

Indem man diese Katalysatorkomponenten auf ein partikuläres Trägermaterial, z.B. Silica oder Aluminiumoxid aufbringt, ist auch eine lösungsmittelfreie Reaktionsführung im Sinne einer Gasphasenpolymerisation möglich.

Geeignete Lösungsmittel umfassen insbesondere polare Lösungsmittel wie Etherverbindungen, z.B. Tetrahydrofuran, Diethylether, Dioxan, 2,5,8-Trioxanon, Anisol und Diethylenglykoldimethylether (Diglyme), sowie Dimethylformamid oder Dimethylsulfoxid. Protische Lösungsmittel sind weniger geeignet, da sie z.B. im Wege einer Esterbildung zur Kettenterminierung führen können.

Üblicherweise führt man die Polymerisation unter erhöhtem Kohlenmonoxiddruck bis zu 250 bar durch. Allerdings wird auch bei einem Kohlenmonoxiddruck von einer Atmosphäre Polymerbildung beobachtet. Bevorzugt wird der Kohlenmonoxiddruck in einem Bereich von 2 bis 200 bar, insbesondere in einem Bereich von 10 bis 80 bar durchgeführt.

Geeignete Polymerisationstemperaturen bewegen sich im Bereich von Raumtemperatur, d.h. etwa 25°C bis 150°C und werden bevorzugt auf Werte im Bereich von 35 bis 90°C eingestellt.

Die Polymerisation nach dem erfindungsgemäßen verfahren kann sowohl absatzweise als auch kontinuierlich durchgeführt werden.

Im allgemeinen geht man bei der Reaktionsführung so vor, dass zunächst Cobaltverbindung und Acetal, Anhydrid, Orthoester, P₂O₅, MgO, MgCl₂, MgSO₄ oder Zeolith sowie gegebenenfalls hydroxysubstituierter N-Aromat und/oder hydroxyaromatische Verbindung, separat oder im Reaktionsgefäß, gegebenenfalls unter Kühlung, zusammengegeben werden. Auch die Oxiranverbindung kann gegebenenfalls bereits der Lösung/Suspension der Katalysatorkomponenten beigemengt werden, bevor diese in das Reaktionsgefäß überführt wird. Des weiteren kann die Oxiranverbindung auch direkt in das Reaktionsgefäß eingebracht werden. Bevorzugt wird die Polymerisation unter inerten Bedingungen, d.h. in Abwesenheit von Feuchtigkeit und Luft durchgeführt.

Abbruch, Trennung und Aufreinigung der Polymerisation können nach allgemein bekannten Verfahren vorgenommen werden. Beispielsweise lässt sich das Polymerprodukt durch Zugabe von niedermolekularen Alkoholen wie Methanol ausfällen und auf einfache Weise mittels Filtration isolieren.

Mit dem erfindungsgemäßen Verfahren lassen sich ausgehend von enantiomeren einer Oxiranverbindung isotaktische Poly(3-hydroxyalkanoate) erhalten. Werden in optisch angereicherter Form vorliegende Oxiranverbindungen eingesetzt, gelangt man zu teilisotaktischen Polymeren, wobei der Grad an optischer Reinheit unmittelbar mit dem Grad an erzielter Isotaktizität im Copolymer korrespondiert. Auf diese Weise und auch über das Molekulargewicht lassen sich das thermoplastische Eigenschaftsprofil dieser biologisch abbaubaren Polymerklasse sehr einfach und gezielt für gewünschte Anwendungen einstellen.

Die nach dem erfindungsgemäßen Verfahren erhaltenen Polymere weisen in der Regel Molekulargewichte M_{w} (bestimmt mittels Gel-Permeationschromatographie gegen einen eng verteilten Polystyrol-Standard) größer 6.000, bevorzugt größer 8.000 und besonders bevorzugt größer 10.000 g/mol auf. Die Polydispersitäten liegen im allgemeinen unterhalb von 1,7, bevorzugt unterhalb von 1,5 und besonders bevorzugt unterhalb von 1,4. Die Schmelzpunkte der erhaltenen Polymere liegen üblicherweise oberhalb von 70, bevorzugt oberhalb von 80, besonders bevorzugt oberhalb von 90°C. Mit dem erfindungsgemäßen Verfahren lassen sich üblicherweise ohne weiteres Umsätze größer 90 und insbesondere auch größer 95% erzielen, d.h. es ist nicht notwendig, das Polymerprodukt von nicht umgesetztem Monomer zu reinigen.

Die nach dem erfindungsgemäßen Verfahren erhaltenen Polymere lassen sich mittels Spritzguss, Blasformen, Verspinnen, Rotationsformen oder Extrusion verarbeiten. Außerdem gelingt die Beschichtung metallischer, keramischer und anderer Oberflächen, z.B. solcher aus Kunststoffmaterialien, Holz, Papier oder Zellstoff.

Die erhaltenen Polymere eignen sich zur Herstellung von Fasern, Folien, Formkörpern und Beschichtungen. Weiterhin sind sie als Mischkomponenten in Kunststoffen verwendbar. Geeignete Mischungen werden beispielsweise erhalten mit Polybutylenterephthalat oder dem biologisch abbaubaren Polymer Ecoflex®, einem Copolymer aus Adipinsäure, Butandiol und Terephthalsäure. Details zur Zusammensetzung, zum Aufbau und zur Herstellung von Ecoflex® finden sich z.B. in European Chemical News, 1995 (7), Seite 36 beschrieben.

Die vorliegende Erfindung wird anhand der nachfolgenden Beispiele näher erläutert.

### Beispiele:

Ethylenoxid wurde von der Firma Merck, Dicobaltoctacarbonyl von der Firma Fluka sowie 3-Hydroxypyridin und Phenol von der Firma Aldrich bezogen und jeweils ohne weitere Aufreinigung bei der Polymerisation eingesetzt. Diglyme wurde von der Firma Fluka bezogen (über Molekularsieb gelagert) und vor jeder Verwendung mittels Ultraschall entgast.

Die Molekulargewichte wurden mittels Gel-Permeations-Chromatrographie gegen einen eng verteilten Polystyrolstandard bestimmt. Die Schmelzpunkte wurden anhand von DSC-Messungen ermittelt.

### Versuchsbeschreibung:

### Beispiel 1:

Zu Co₂(CO)₈ (684 mg) in Diglyme (80 ml) gab man bei Raumtemperatur unter einer Argonatmosphäre 3-Hydroxypyridin (760 mg) und 2,2'-Dimethoxypropan (1,1 g) sowie nach erfolgter Vermengung und Verschluss des Autoklaven (270 ml) Ethylenoxid (20 ml). Es wurde ein Kohlenmonoxiddruck von 20 bar eingestellt, das Reaktionsgefäß auf 80°C erwärmt und anschließend der Kohlenmonoxiddruck auf 60 bar gebracht. Die Polymerisation wurde nach einer Reaktionsdauer von 1 Stunde durch Druckverminderung auf Umgebungsdruck und durch Gießen des Reaktionsgemisches in Methanol (400 ml) abgebrochen, das Reaktionsgemisch filtriert, vom Filtrat das Lösungsmittel entfernt. Das erhaltene Polymer wurde isoliert, mit Methanol gewaschen, filtriert und im Vakuum getrocknet. Die Ausbeute an Polymer betrug 8,84 g, das Molekulargewicht M_{w} wurde zu 10.500 g/mol ermittelt und die Polymerdispersität lag bei 1,8.

### Vergleichsversuch:

### Beispiel 2:

Es wurden exakt die gleichen Mengen und Bedingungen wie in Beispiel 1 eingehalten mit dem einzigen Unterschied, dass auf die Zugabe von 2,2'-Dimethoxypropan verzichtet wurde. Die Ausbeute an Polyester betrug 7,4 g, das Molekulargewicht M_{w} wurde zu 5.100 g/mol ermittelt und die Polydispersität lag bei 1,7.

## Patentansprüche

1. Verfahren zur Herstellung von thermoplastischen Poly(3-hydroxyalkanoaten) mit einem Molekulargewicht M_{w} größer 6.000 g/mol und einem Schmelzpunkt im Bereich von 70 bis 170°C durch Umsetzung einer Oxiranverbindung mit Kohlenmonoxid in Gegenwart eines mit neutralen Lewis-Basen chelatisierten Übergangsmetallkatalysators mit Rhodium(0), Nickel (0), Eisen(0), Cobalt(0) oder Palladium(0) als Zentralmetall sowie in Gegenwart von Orthoestern, Acetalen, Carbonsäureanhydriden, P₂O₅, MgO, MgCl₂, MgSO₄, Zeolithen oder deren Mischungen bei einem Druck im Bereich von 1 bis 250 bar und einer Temperatur im Bereich von Raumtemperatur bis 150°C.

2. Verfahren nach Anspruch 1, wobei man in 1-Position einfach substituierte oxiranverbindungen verwendet.

3. Verfahren nach den Ansprüchen 1 oder 2, wobei man enantiomerenreine oder optisch angereicherte Oxiranverbindungen verwendet.

4. Verfahren nach den Ansprüchen 1 bis 3, wobei man als Acetal 2,2'-Dimethoxypropan verwendet.

5. Verfahren nach den Ansprüchen 1 bis 4, wobei man die Copolymerisation in Gegenwart eines hydroxysubstituierten N-Aromaten durchführt.

6. Verfahren nach den Ansprüchen 1 bis 5, wobei man die Copolymerisation in Gegenwart einer hydroxyaromatischen Verbindung durchführt.

7. Verfahren nach den Ansprüchen 1 bis 6, wobei man eine Oxiranverbindung mit einer Enantiomerenreinheit im Bereich von 60 bis 99 %-ee verwendet.

8. Verfahren nach den Ansprüchen 1 bis 7, wobei man als Oxiranverbindung Propylenoxid verwendet.

9. Verfahren nach den Ansprüchen 1 bis 8, wobei man als Katalysatorverbindung Co₂(CO)₈ verwendet.

10. Verfahren nach den Ansprüchen 1 bis 9, **dadurch gekennzeichnet, dass** die Poly(3-hydroxyalkanoate) ein Molekulargewicht M_{w} größer 8.000, insbesondere größer 10.000 g/mol aufweisen.

## Claims

1. A process for preparing thermoplastic poly(3-hydroxyalkanoates) with a molar mass M_{w} greater than 6 000 g/mol and a melting point in the range from 70 to 170°C, by reacting an oxirane compound with carbon monoxide in the presence of a transition metal catalyst which has rhodium(0), nickel(0), iron(0), cobalt(0) or palladium(0) as central metal and has been chelated with neutral Lewis bases, and also in the presence of ortho esters, acetals, carboxylic anhydrides, P₂O₅, MgO, MgCl₂, MgSO₄, zeolites, or a mixture of these, at a pressure in the range from 1 to 250 bar and at from room temperature to 150°C.

2. A process as claimed in claim 1, where use is made of oxirane compounds which have monosubstitution in the 1-position.

3. A process as claimed in claim 1 or 2, where use is made of enantiomerically pure or optically enriched oxirane compounds.

4. A process as claimed in any of claims 1 to 3, where 2,2'-dimethoxypropane is used as acetal.

5. A process as claimed in any of claims 1 to 4, where the copolymerization is carried out in the presence of a hydroxyl-substituted N-aromatic system.

6. A process as claimed in any of claims 1 to 5, where the copolymerization is carried out in the presence of a hydroxyaromatic compound.

7. A process as claimed in any of claims 1 to 6, where use is made of an oxirane compound whose enantiomeric purity is in the range from 60 to 99% ee.

8. A process as claimed in any of claims 1 to 7, where propylene oxide is used as oxirane compound.

9. A process as claimed in any of claims 1 to 8, where Co₂(CO)₈ is used as catalyst compound.

10. A process as claimed in any of claims 1 to 9, wherein the poly(3-hydroxyalkanoates) have a molar mass M_{W} greater than 8 000 g/mol, in particular greater than 10 000 g/mol.

## Revendications

1. Procédé de préparation de poly(3-hydroxyalcanoates) thermoplastiques présentant un poids moléculaire M_{w} supérieur à 6000 g/mole et un point de fusion de l'ordre de 70 à 170°C, par réaction d'un composé oxiranne avec du monoxyde de carbone en présence d'un catalyseur à base de métal de transition chélaté avec des bases de Lewis neutres, comportant du rhodium(0), du nickel(0), du fer(0), du cobalt(0) ou du palladium(0) comme métal central, ainsi qu'en présence d'orthoesters, d'acétals, d'anhydrides d'acide carboxylique, de P₂O₅, de MgO, de MgCl2, de MgSO₄, de zéolites ou de leurs mélanges, à une pression de l'ordre de 1 à 250 bars et à une température de l'ordre de la température ambiante à 150°C.

2. Procédé suivant la revendication 1, dans lequel on utilise des composés oxiranne à simple substitution en position 1.

3. Procédé suivant les revendications 1 ou 2, dans lequel on utilise des composés oxiranne ayant une pureté d'énantiomères ou enrichis optiquement.

4. Procédé suivant les revendications 1 à 3, dans lequel on utilise du 2,2'-diméthoxypropane comme acétal.

5. Procédé suivant les revendications 1 à 4, dans lequel on effectue la copolymérisation en présence d'une substance N-aromatique hydroxysubstituée.

6. Procédé suivant les revendications 1 à 5, dans lequel on effectue la copolymérisation en présence d'un composé hydroxyaromatique.

7. Procédé suivant les revendications 1 à 6, dans lequel on utilise un composé oxiranne ayant une pureté d'énantiomères de l'ordre de 60 à 99%-ee.

8. Procédé suivant les revendications 1 à 7, dans lequel on utilise de l'oxyde de propylène comme composé oxiranne.

9. Procédé suivant les revendications 1 à 8, dans lequel on utilise du Co₂(CO)₈ comme composé catalytique.

10. Procédé suivant les revendications 1 à 9, **caractérisé en ce que** les poly(3-hydroxyalcanoates) présentent un poids moléculaire M_{w} supérieur à 8000, en particulier supérieur à 10.000 g/mole.
